# EUROPEAN PATENT APPLICATION

(11) **EP 2 189 872 A1**
(43) Date of publication of application: **26.05.2010**
(21) Application number: 09176238.5
(22) Date of filing: 17.11.2009
(51) Int. Cl.: G06F 1/16, G06F 15/02

(54) **Electronic book with enhanced features**

(30) Priority: 25.11.2008 US 277469
(71) Applicant: Sony Corporation, Tokyo 108-0075 (JP); Sony Electronics, Inc., Park Ridge, NJ 07675 (US)
(72) Inventor: Milne, James R., Ramona, CA 92065 (US); Yasuhara, Trisha Ann Sachie, San Diego, CA 92102 (US)
(74) Representative: DeVile, Jonathan Mark

(57) **Abstract**

An electronic book with opposed displays facing each other on a foldable housing can present book text on each page in portrait mode. Upon receipt of a mode change signal caused by, for example, the user rotating the book 90°, the lower display can display an image of a keyboard and/or text in landscape mode while the upper display can present text in landscape mode. The keyboard image may be for a user-selected language.

## Description

### Field of the Invention

The present invention relates generally to electronic books.

### Background of the Invention

Electronic books have been provided in which a person can read electronic book files stored on a storage medium in a compact, hand-held housing. Text is presented on a display of the housing, and more than a single electronic book can be stored on the storage medium. In this way, a person can in effect transport a large number of books for reading at the person's leisure in a single lightweight electronic book form factor. As recognized herein, such electronic books can be made even more convenient and user-friendly.

### SUMMARY OF THE INVENTION

Various aspects and features of the present invention are defined in the appended claims.

An electronic book includes a housing and first and second electronic touch screen displays supported on the housing. A digital processor in the housing controls presentation on the displays. A tangible computer-reader storage medium is accessible to the processor, with electronic book files being stored on the medium for presentation of text represented by the files in a portrait mode on the display. The processor receives a display mode change signal and in response automatically changes presentation of text on at least one display from portrait mode to landscape mode.

In some embodiments, in response to the display mode change signal the processor presents an image of a keyboard in landscape on the first display and an image of text in landscape on the second display. The display mode change signal can be generated by a person touching a key on the housing. Alternatively or in addition an accelerometer can be provided in the housing to provide an input signal to the processor. The display mode change signal can be generated by the signal exceeding a threshold.

In some implementations the processor presents a user interface on the display allowing a user to select a language. A keyboard associated with the language selected by the user is automatically presented upon receipt of a display mode change signal. In example embodiments the housing is foldable to mimic opening and closing a paper book.

In some example embodiments a position signal receiver is supported by the housing and communicates with the processor. In other embodiments a solar charger receptacle is on the housing and is connectable to a solar charger to charge a battery in the housing.

In another aspect, an electronic book includes a housing, at least a first electronic touch screen display supported on the housing, and a digital processor in the housing controlling presentation on the display. A tangible computer-reader storage medium is accessible to the processor. Electronic book files are stored on the medium for presentation of text represented by the files on the display. The processor presents a user interface on the display allowing a user to select a language, with a keyboard associated with the language selected by the user being automatically presented on the display upon receipt of a display mode change signal.

In another aspect, a method includes providing an electronic book with opposed first and second displays facing each other on a foldable housing, and presenting book text on each page in portrait layout. Upon receipt of a mode change signal, the method presents on the first display an image of a keyboard or text in landscape layout and presents on the second display text in landscape layout.

The details of the present invention, both as to its structure and operation, can best be understood in reference to the accompanying drawings, in which like reference numerals refer to like parts, and in which:

### BRIEF DESCRIPTION OF THE DRAWINGS

Embodiments of the present invention will now be described with reference to the accompanying drawings, where like parts bear identical numerical references and in which;
Figure 1 is a perspective view of an example electronic book in the closed configuration;
Figure 2 is a perspective view showing the electronic book of Figure 1 in the open configuration;
Figure 3 is a block diagram of an example book;
Figures 4-6 are schematic diagrams illustrating changing between landscape and portrait modes;
Figure 7 is a flow chart showing some of the logic outlined in Figures 4-6; and
Figure 8 is a flow chart of the keyboard language logic.

### DETAILED DESCRIPTION OF THE PREFERRED EMBODIMENT

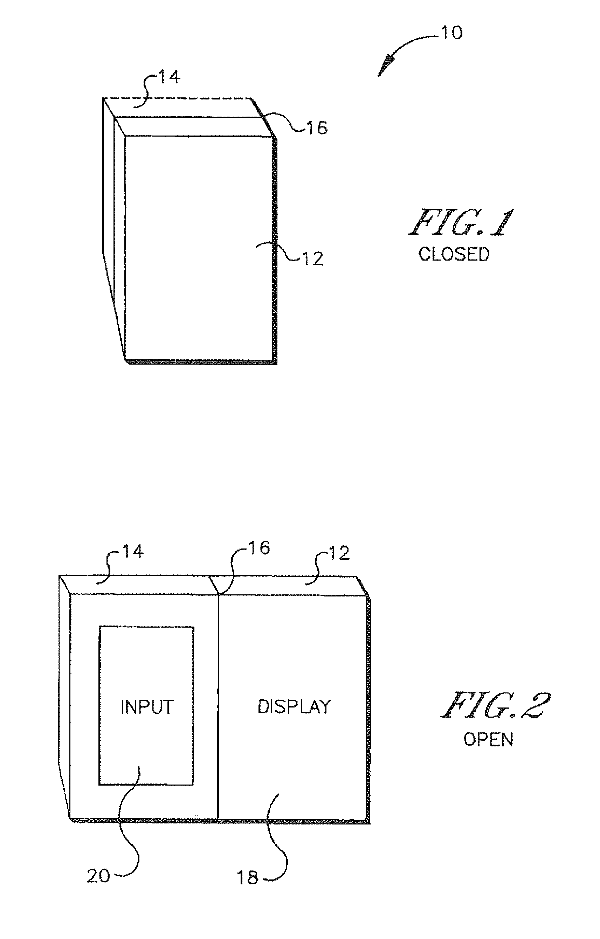

Referring initially to Figures 1 and 2, an example electronic book 10 is shown that can have, in one embodiment, a foldable configuration to mimic opening and closing a paper book. Specifically, the electronic book 10 may have a rigid lightweight plastic "cover" member 12 joined to a rigid lightweight plastic "back" member 14 along a hinge 16 for movement between an open configuration (Figure 2), wherein an electronic display 18 of the "cover" member 12 is exposed for viewing, and a closed configuration (Figure 1), wherein the display 18 is not exposed because it lies flush against the inside surface of the "back" member 14_{.} If desired, an input device 20 such as another touch screen display may be provided on, e.g., the "back" member 14.

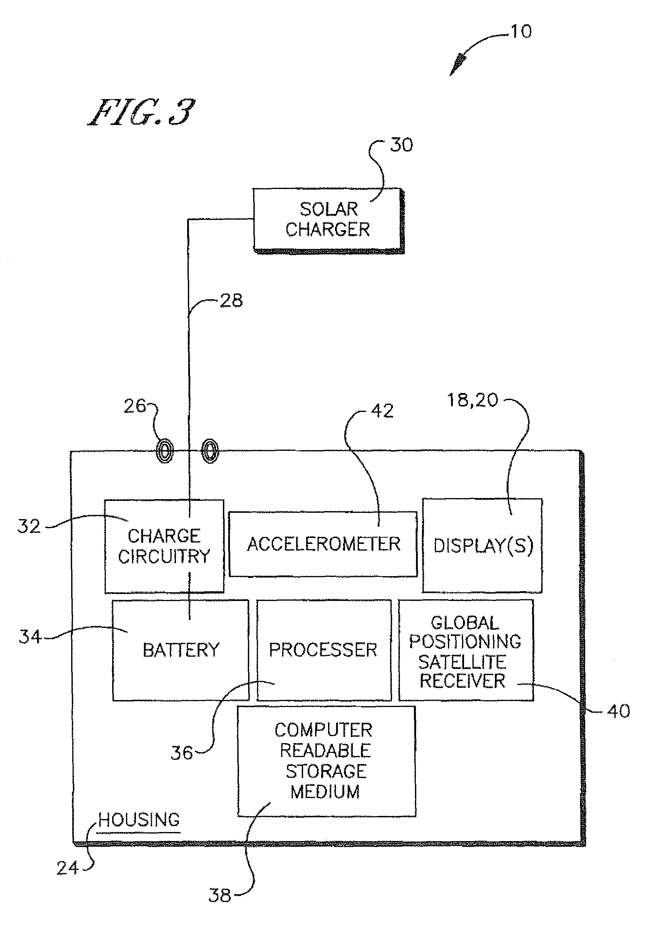

Figure 3 shows some internal components of the electronic book 10, including a lightweight portable plastic housing 24 bearing the displays 18, 20. Without limitation the displays may be a liquid crystal display (LCD), light emitting diode display (LED), or other appropriate electronic display technology.

If desired, the housing 24 may be formed with a solar charger cord receptacle 26 for receiving a connector of a cord 28 of a solar charger 30. Charge circuitry 32 such as appropriate conversion, filtering, and amplification circuitry may be within the housing 24 in communication with the receptacle 26 to provide charge current to one or more rechargeable DC batteries 34 in the housing 24.

The battery 34 powers one or more processors 36 in the housing 24. In turn, the processor 36 can access a tangible computer-reader storage medium 38 such as but not limited to disk-based storage and/or solid state storage to execute logic herein. The medium 38 may be contained in the housing as shown or may be remotely accessed by the processor over a network.

Electronic book files can also be stored on the medium 38, as well as other applications including, for example, a word processing application. It is to be understood that the processor 36 controls the displays 18, 20 to present user interfaces including a list of titles stored on the medium 38, command input elements to support the logic set forth below, book text from files on the medium 38, and an image of an input device such as a keyboard with which the user can input alpha-numeric signals.

In some embodiments the processor 36 may communicate with one or more position receivers 40 such as a global positioning satellite (GPS) receiver to receive geographic position information of the book 10 and present the information if desired on one of the screens 18, 20. Also, in some implementations an accelerometer 42 may be provided in the housing 24 and may provide signals to the processor 36 representing acceleration and more particular angular acceleration for purposes to be shortly disclosed.

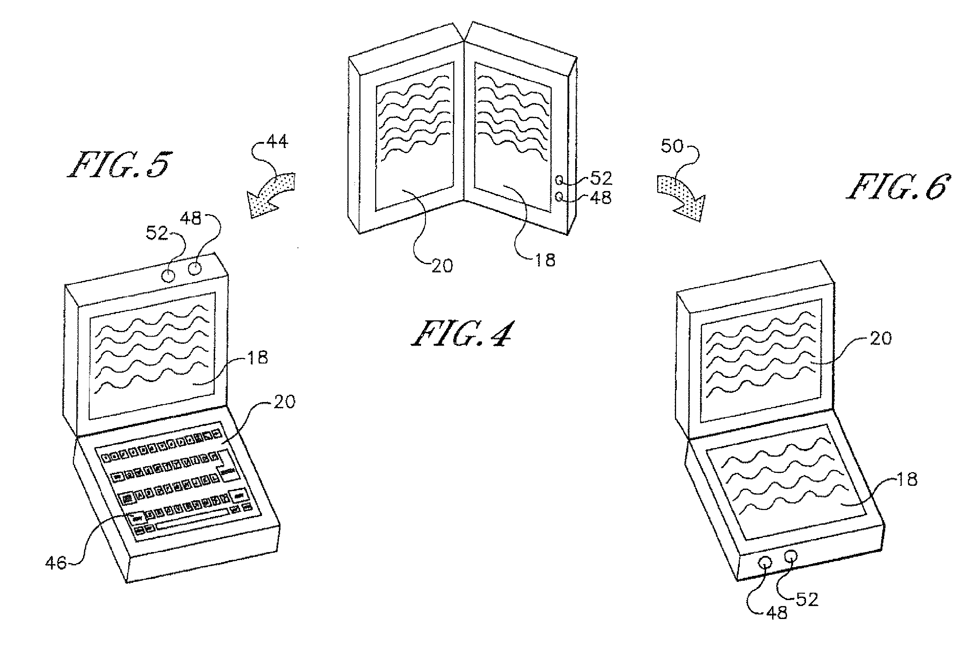

Turning to Figures 4-6, an example feature of present principles is shown. As shown in Figure 4, the displays 18 20 can present images of respective book pages in a portrait format, i.e., with a rectangular non-square text layout in which the short dimension extends left to right and the long dimension extends top to bottom. Thus, for instance, the left display 20 may present an image of text on a book page and the right display may present an image of the next page of the book.

According to the example embodiment shown in Figures 4-6, the processor 36 shown in Figure 2 can automatically rearrange the text layout from portrait to landscape (in which the long dimension of text layout is left to right and the short dimension is top to bottom) upon receipt of a predetermined signal. Cross-referencing Figures 4 and 5 as an example, should the user rotate the book 10 counterclockwise 90° as shown by the arrow 44 and as sensed by the accelerometer 42, and the signal from the accelerometer indicates a rotation of sufficient speed and angular distance to establish a "keyboard" signal input to the processor 36, then as shown in Figure 5 the text layout on the (now upper) display is automatically changed from portrait to landscape as shown.

Also, if desired the (now lower) display 20 is automatically caused to present an image 46 of a keyboard such as a QWERTY keyboard or other keyboard as may be dictated by the choice of language described further below, which, owing to the touch screen capability of the display 20, may be manipulated by a user to input alpha-numeric text. Accordingly, upon receipt of the keyboard signal the processor 36 may automatically invoke a word processing application on the computer medium 38 to facilitate user input. And, the (now upper) display 18 may be caused by the processor 36 to display text received from the virtual keyboard 46, preferably in landscape format as shown. In this way, the electronic book 10 may be quickly and automatically reconfigured from an electronic book displaying pages of text to a word processing computer.

Alternatively to providing an accelerometer to generate the keyboard signal and subsequent operation described above, a virtual or mechanical selector key 48 may be provided on the book 10 that a user can toggle to input the "keyboard" signal to the processor.

Rotating the book 10 back clockwise 90° to the orientation shown in Figure 4 (alternatively, toggling the selector key 48) can cause the processor to automatically configure the displays 18, 20 as shown in Figure 4, i.e., back into book text-only presentation in portrait mode.

Additionally, should the user orient the book 10 as shown in Figure 4 in portrait mode and wish to simply change the displayed book page layout from portrait to landscape, as indicated by the arrow 50 the user need simply rotate the book 90° clockwise to the orientation shown in Figure 6. As shown in Figure 6, both displays 18, 20 are automatically caused to change the layout of the same text shown in Figure from portrait to landscape (Figure 6). Alternatively, a mechanical or virtual conversion key 52 may be provided on the book 10 and manipulated by a user to input a command to the processor 36 to change the book text layout from portrait to landscape.

Rotating the book 10 back counterclockwise 90° to the orientation shown in Figure 4 (alternatively, toggling the key 52) can cause the processor to automatically configure the displays 18, 20 as shown in Figure 4, i.e., back into book text-only presentation in portrait mode.

It is to be understood that CCW rotation may be used in lieu of CW rotation to reconfigure the displays from Figure 4 to Figure 6 and that CW rotation may be used in lieu of CCW rotation to reconfigure the displays from Figure 4 to Figure 5.

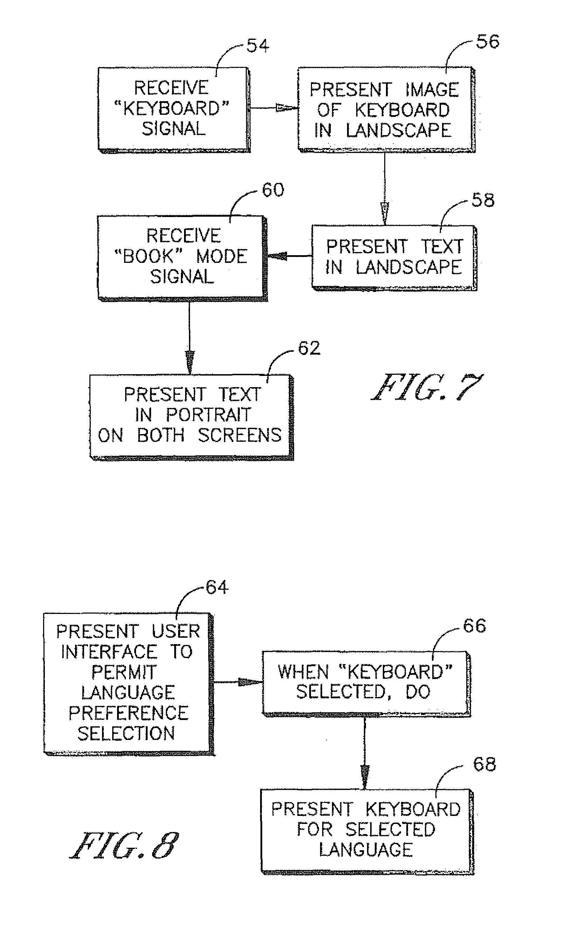

Figure 7 shows example logic for illustration that may be used to reconfigure the book 10 from the layout of Figure 4 to the layout of Figure 5, it being understood that equivalent logic may be used to reconfigure the book 10 from the layout of Figure 4 to the layout of Figure 6. Commencing at block 54 in general a "reconfigure" signal is received from, e.g., the accelerometer 42 or selector key 48 as described above, with the "reconfigure" signal in the context of Figures 4 and 6 being regarded as a "keyboard" signal since it automatically reconfigures the book 10 to display an image of a virtual keyboard. To this end, when the accelerometer is used, the processor may determine whether the signal received from the accelerometer satisfies a threshold in the appropriate direction of rotation and if so, determine that the user has evinced a desire to enter the landscape-keyboard mode by rotating the book 10 sufficiently quickly and far.

At block 56 the image 46 of the keyboard is presented as described in landscape layout, while at block 58 associated text is presented in landscape on the upper display as shown in Figure 6. Block 60 simply indicates that another signal (termed "book" signal for convenience) may be received from the accelerometer 42 or selector key 48 to cause the book to automatically reassume the portrait mode layout at block 62 and as shown in Figure 4.

In some embodiments the image 46 of the virtual keyboard presents the images of keys according to a language selected by a user. Block 64 of Figure 7 indicates that such a language selection may be made from a user interface screen that permits the user to select preferences including language. For example, if "English" is selected and the "keyboard" signal subsequently received at block 66, the image 46 may be of a QWERTY keyboard as used in English input devices at block 68. Other keyboard images may be used, e.g., a kanji-style keyboard image may be presented if "Japanese" is the selected language, or a Cyrillic keyboard image may be displayed if "Russian" is the selected language, and so on. To this end, the storage medium 38 may store multiple keyboard images, one for each language that the user is permitted to select.

While the particular ELECTRONIC BOOK WITH ENHANCED FEATURES is herein shown and described in detail, it is to be understood that the subject matter which is encompassed by the present invention is limited only by the claims.

Various further aspects and features of the present invention are defined in the appended claims. Various combinations of the features from the dependent claims can be made with those of the independent claims in addition to those explicitly recited in the claim dependency of the appended claims.

Various further aspects and features of the present invention are defined in the following numbered clauses:
1. Method comprising:
   providing an electronic book with opposed first and second displays facing each other on a foldable housing;
   presenting book text on each page in portrait layout;
   upon receipt of a mode change signal, presenting on the first display an image of a keyboard or text in landscape layout and presenting on the second display text in landscape layout.
2. The method of clause 1, comprising, upon receipt of the mode change signal, presenting on the first display an image of a keyboard in landscape layout.
3. The method of clause 1, comprising, upon receipt of the mode change signal, presenting on the first display an image of text in landscape layout.
4. The method of clause 2, wherein the keyboard image is for a user-selected language.
5. The method of clause 1 or 2, wherein the mode change signal is generated by a person rotating the book 90°.

## Claims

1. Electronic book comprising:
a housing;
first and second electronic touch screen displays supported on the housing;
a digital processor in the housing controlling presentation on the displays;
a tangible computer-reader storage medium accessible to the processor, electronic book files being stored on the medium for presentation of text represented by the files in a portrait mode on the display;
the processor receiving a display mode change signal and in response automatically changing presentation of text on at least one display from portrait mode to landscape mode.

2. The electronic book of Claim 1, wherein in response to the display mode change signal the processor presents an image of a keyboard in landscape on the first display and an image of text in landscape on the second display.

3. The electronic book of Claim 1, wherein the display mode change signal is generated by a person touching a key on the housing.

4. The electronic book of Claim 1, comprising an accelerometer in the housing and providing input signal to the processor, wherein the display mode change signal is generated by the input signal exceeding a threshold.

5. The electronic book of Claim 1, wherein the processor presents a user interface on the display allowing a user to select a language, a keyboard associated with the language selected by the user being automatically presented upon receipt of a display mode change signal.

6. The electronic book of Claim 1, wherein the housing is foldable to mimic opening and closing a paper book.

7. The electronic book of Claim 1, comprising at least one position signal receiver supported by the housing and communicating with the processor.

8. The electronic book of Claim 1, comprising at least one solar charger receptacle on the housing and connectable to a solar charger to charge a battery in the housing.

9. Electronic book comprising:
a housing;
at least a first electronic touch screen display supported on the housing;
a digital processor in the housing controlling presentation on the display;
a tangible computer-reader storage medium and accessible to the processor, electronic book files being stored on the medium for presentation of text represented by the files on the display;
the processor presenting a user interface on the display allowing a user to select a language, a keyboard associated with the language selected by the user being automatically presented on the display upon receipt of a display mode change signal.

10. The electronic book of Claim 9, wherein the processor receives a display mode change signal and in response automatically changes presentation of text from portrait mode to landscape mode on the display.

11. The electronic book of Claim 10, comprising a second display on the housing, wherein in response to the display mode change signal the processor presents an image of a keyboard in landscape on the first display and an image of text in landscape on the second display.

12. The electronic book of Claim 10, wherein the display mode change signal is generated by a person touching a key on the housing.

13. The electronic book of Claim 10, comprising an accelerometer in the housing and providing input signal to the processor, wherein the display mode change signal is generated by the input signal exceeding a threshold.

14. The electronic book of Claim 9, comprising at least one position signal receiver supported by the housing and communicating with the processor.

15. The electronic book of Claim 9, comprising at least one solar charger receptacle on the housing and connectable to a solar charger to charge a battery in the housing.
